# FASCICULE DE BREVET EUROPEEN

(11) **EP 1 413 158 B1**
(45) Date de publication et mention de la délivrance du brevet: **20.08.2008**
(21) Numéro de dépôt: 02764976.3
(22) Date de dépôt: 11.07.2002
(51) Int. Cl.: H04Q 7/32, G07F 7/10

(54) **PROCEDE D'ACCES A UN SERVICE SPECIFIQUE PROPOSE PAR UN OPERATEUR VIRTUEL ET CARTE A PUCE D'UN DISPOSITIF CORRESPONDANT**
ZUGANGSVERFAHREN ZU EINEM VON EINEM VIRTUELLEN OPERATOR VORGESCHLAGENEN SPEZIFISCHEN DIENST UND CHIPKARTE FÜR EINE ENTSPRECHENDE VORRICHTUNG
METHOD OF ACCESSING A SPECIFIC SERVICE OFFERED BY A VIRTUAL OPERATOR AND THE CHIP CARD FOR A CORRESPONDING DEVICE

(30) Priorité: 11.07.2001 FR 0109238
(43) Date de publication de la demande: 28.04.2004
(73) Titulaire: GEMPLUS, 13420 Gémenos (FR)
(72) Inventeur: LAPORTE, Frédéric, F-13008 Marseille (FR); PLICHON, Stéphane, F-92260 Fontenay aux Roses (FR)
(86) Numéro de dépôt international: PCT/FR2002/002451
(87) Numéro de publication internationale: WO 2003/007638

(56) Documents cités:
- EP-A- 0 891 111
- EP-A- 1 033 652
- WO-A-00/65855
- DE-A- 19 801 576
- US-A- 5 297 192
- US-A- 6 047 071

## Description

L'invention concerne un procédé d'accès à un service de radiocommunication proposé par un opérateur virtuel représenté par un opérateur physique.

L'invention se rapporte également à une carte à puce d'un dispositif de radiocommunication, aptc à accéder à un service proposé par un opérateur virtuel.

On entend par carte à puce tout dispositif ou support à puce électrorique.

Le domaine de l'invention est celui des radiocommunications avec les terminaux mobiles.

Les dispositifs de radiocommunication tels que les radiotéléphones mobiles comportent une carte à puce telle qu'une carte SIM leur permettant notamment de se connecter sur le réseau d'un opérateur.

Actuellement cette carte à puce, fournie par l'opérateur lors de l'inscription du client sur le réseau de l'opérateur, comprend des paramètres d'authentification entre l'opérateur et la carte. Ces paramètres secrets sont chargés dans la carte à puce au cours d'une étape de personnalisation et ne peuvent être modifiés par la suite. L'opérateur délègue généralement cette étape de personnalisation à une société qui la réalise dans des sites spécialisés et sécurisés non connectés au réseau de l'opérateur.

Le document US A 6 047 071, du 4 avril 2000 de B Shah divulgue ainsi un mécanisme de mise à jour de paramètres de services proposés, et par ailleurs le document US A 5 297 192, du 22 mars 1994 de I Gerszberg divulgue un système d'activation d'accès à un service proposé à un utilisateur d'un service de radiocommunication néanmoins ces deux documents ne donnent aucune indication permettant de déduire une méthode d'accès à un service spécifique, avec établissement d'une radiocommuunication à partir de nouveaux paramètres d'authentification du dispositif de radiocommunication à un autre opérateur physique assurant ledit service spécifique.

Des opérateurs virtuels de réseaux mobiles ("Mobile Virtual Network Operator" ou "MVNO", eu anglais) apparaissent actuellement sur le marché. Ces opérateurs virtuels (sans infrastructure) proposent des services spécifiques à des segments de clientèle particuliers, tel que celui de la clientèle bancaire, auxquels les opérateurs traditionnels n'ont pas accès.

On entend par services spécifiques à la fois des services à valeur ajoutée et les services de communication permettant au client d'accéder à ces services à valeur ajoutée.

On peut citer comme exemples de services à valeur ajoutée :
- l'accès sécurisé à des réseaux privés d'entreprise permettant aux clients de se connecter depuis leur terminal mobile aux services du réseau de leur entreprise tels que la messagerie et l'accès aux serveurs de données ; la sécurité d'accès est alors assurée grâce aux paramètres de sécurité présents sur la carte à puce ;
- lorsque le MVNO est représenté par un établissement bancaire, celui-ci peut proposer des services d'opérations bancaires à distance tels que la validation d'ordres de virement ou l'exécution d'opérations comptables par une personne autorisée ; là encore, l'exécution de ces opérations est validée grâce aux paramètres de sécurité présents dans la carte à puce, qui permettent de réaliser une signature électronique ;
- la gestion des cartes à puce d'abonnements aux différents services d'opérateurs physiques et virtuels, sur lesquelles reposent les communications et les différents services, par exemple leur renouvellement.

On peut citer comme exemple de service de communication, le service d'accès à Internet, les services d'accès à des réseaux privés d'entreprise ou intranet, ou les services de transport de données sur réseaux filaires. Les services de communication peuvent comprendre également les services de radiocommunication de base offerts par un opérateur.

Mais le MVNO ne disposant pas lui-même de l'infrastructure de transport des radiocommunications, sous-traite les radiocommunications à un opérateur "physique" disposant de cette infrastructure et des moyens permettant d'assurer un ou plusieurs des services spécifiques. Le MVNO est hébergé ou représenté par cet opérateur physique et en liaison de communication avec celui-ci.

Actuellement, les services proposés par les MVNO sont des services de données ne sollicitant que l'opérateur qui héberge le MVNO.

Le but de la présente invention est donc de permettre au client d'accéder à des services spécifiques offerts par différents opérateurs physiques sélectionnés par le MVNO.

Le but plus général de la présente invention est de rendre plus souple l'accès aux différents services spécifiques offerts par des opérateurs virtuels et des opérateurs physiques.

L'invention a pour objet un procédé d'accès à un service spécifique, au moyen d'un dispositif de radiocommunication comprenant des premiers paramètres d'authentification, et comportant l'étape consistant à établir une radiocommunication à partir de nouveaux paramètres d'authentification du dispositif de radiocommunication.

Selon un mode de réalisation, elle concerne un procédé d'accès à un service spécifique proposé par un opérateur virtuel représenté par un opérateur physique, au moyen d'un dispositif de radiocommunication comprenant des premiers paramètres d'authentification, principalement **caractérisé en ce qu**'il comporte l'étape consistant à établir une radiocommunication à partir de nouveaux paramètres d'authentification à un autre opérateur physique assurant ledit service spécifique.

Selon une caractéristique de l'invention, les paramètres d'authentification sont contenus dans une carte à puce.

Le procédé permet en outre un procédé de renouvellement ou d'initialisation d'une carte à puce électronique d'un dispositif électronique, les premiers paramètres d'authentification étant des paramètres transitoires donnant un accès au service spécifique de renouvellement ou d'initialisation, les nouveaux paramètres permettant ensuite un accès au service d'un opérateur.

Selon une autre caractéristique de l'invention, le procédé comporte une étape consistant, préalablement à l'établissement de la radiocommunication, à charger et mémoriser dans la carte à puce lesdits nouveaux paramètres d'authentification de manière sécurisée.

Les nouveaux paramètres d'authentification sont avantageusement chargés sous le contrôle dudit opérateur virtuel.

Selon un mode de réalisation de l'invention, les nouveaux paramètres d'authentification sont chargés dans la carte à puce via le réseau de radiocommunication de l'opérateur physique qui représente l'opérateur virtuel.

Le chargement comporte de préférence des transactions réalisées selon les étapes suivantes :
a- envoi par la carte à puce à l'opérateur virtuel, de données en vue du changement d'opérateur,
b- vérification desdites données par l'opérateur virtuel qui, lorsque la vérification n'est pas bonne rejette la transaction, sinon
c- envoi par l'opérateur virtuel à l'opérateur physique cible des données vérifiées,
d- vérification par l'opérateur cible des données reçues qui, lorsque la vérification n'est pas bonne rejette la transaction, sinon
e- génération par l'opérateur cible de nouveaux paramètres d'authentification,
f- envoi des paramètres par l'opérateur cible à l'opérateur virtuel,
g- vérification desdits paramètres par l'opérateur virtuel qui, lorsque la vérification n'est pas bonne rejette la transaction, sinon
h- signature desdits paramètres par l'opérateur virtuel et envoi à la carte à puce desdits paramètres,
i- vérification desdits paramètres par la carte à puce qui, lorsque la vérification n'est pas bonne rejette la transaction sinon mémorise lesdits paramètres.

Selon une caractéristique de l'invention, la vérification des étapes b et/ou d et/ou g et/ou i est réalisée au moyen d'un certificat.

Selon une caractéristique additionnelle de l'invention, l'envoi des étapes a et h transite par un opérateur physique autre que l'opérateur cible ou que l'opérateur représentant l'opérateur virtuel.

Selon un autre mode de réalisation, les nouveaux paramètres d'authentification sont chargés dans la carte à puce en dehors d'une connexion au réseau d'un desdits opérateurs physiques. Par exemple, cette opération peut être déléguée à la société qui s'occupe de la personnalisation des cartes et qui chargera plusieurs paramètres d'authentification lors de la phase de personnalisation.

Dans un cas où la société de personnalisation n'a pas la connaissance des paramètres d'authentification nécessaires, on peut combiner les modes de réalisation précédents : la société de personnalisation charge des paramètres d'authentification transitoires ne permettant qu'un accès limité à un opérateur physique donné par exemple, ce dernier se chargeant alors de remplacer par une communication sur le réseau ces paramètres par ses paramètres définitifs selon la méthode décrite ci-dessus.

Selon une autre caractéristique de l'invention, les paramètres d'authentification comportent un identifiant d'abonné mobile, une clé cryptographique d'authentification entre carte à puce et opérateur ainsi que des informations de facturation de l'abonné.

L'invention a aussi pour objet une carte à puce d'un dispositif de radiocommunication, apte à accéder à un service spécifique proposé par un opérateur virtuel représenté par un opérateur physique, et comportant une (ou plusieurs) mémoire(s) de stockage de données et une mémoire de programme contenant un programme apte à accéder audit service spécifique, **caractérisé en ce que** ladite mémoire de stockage de données contient des paramètres d'authentification entre la carte à puce et d'autres opérateurs que l'opérateur représentant l'opérateur virtuel et en ce que ledit programme comporte des instructions permettant d'assurer le changement des paramètres d'authentification d'un opérateur à l'autre en réponse à une sélection du service spécifique.

Ledit programme comporte en outre avantageusement des instructions permettant d'assurer la sécurité du chargement de nouveaux paramètres d'authentification entre la carte à puce et d'autres opérateurs que l'opérateur représentant l'opérateur virtuel et d'assurer le stockage desdits nouveaux paramètres d'authentification dans ladite mémoire de stockage de données.

D'autres particularités et avantages de l'invention apparaîtront clairement à la lecture de la description faite à titre d'exemple non limitatif et en regard des dessins annexés sur lesquels :
la figure 1 représente schématiquement les étapes de chargement de nouveaux paramètres selon un mode de réalisation de l'invention,
la figure 2 représente schématiquement les trajets empruntés par les communications dans le cas d'un deuxième changement d'opérateur physique,
la figure 3 représente schématiquement les principaux composants d'une carte à puce apte à mettre en oeuvre une radiocommunication nécessitant un changement d'opérateur selon l'invention.

Le client d'un opérateur virtuel choisit selon l'invention, un service nécessitant un changement d'opérateur.

Il choisit le service au moyen par exemple d'un menu utilisateur défilant sur l'écran de son radiotéléphone et lui proposant un ensemble de choix d'actions telles que "Se connecter au service de banque à domicile", "Accéder à l'opérateur X", ....

Tout radiotéléphone comporte en effet une carte à puce comprenant un programme de présentation de menus à partir de données présentes dans la carte à puce.

Les données concernant le choix d'un service proposé par le MVNO, peuvent être préchargées à l'initialisation de la carte à puce ; elles peuvent aussi être rechargées lorsque l'utilisateur est en ligne, à l'initiative du MVNO lorsque celui-ci veut par exemple proposer des services nouveaux. Ce rechargement est assuré en utilisant le canal de radiocommunication.

Bien que le changement d'opérateur résulte d'une initiative du client via son choix d'un service, peut être transparent pour le client lui-même comme dans le cas de l'exemple de service suivant.

On peut en effet citer comme autre exemple de service spécifique, un service de radiocommunication à prix réduit. Ce service dépend des prix réduits que le MVNO peut obtenir auprès d'un ou plusieurs opérateurs ; l'opérateur sélectionné par le MVNO varie par exemple en fonction des tranches horaires.

Le procédé de changement d'opérateur selon l'invention est basé sur le changement correspondant des paramètres secrets de la carte à puce.

Les paramètres d'origine de la carte à puce sont les paramètres d'authentification entre la carte à puce et le MVNO et/ou l'opérateur physique représentant le MVNO. Conformément à l'état de la technique, ces paramètres comportent des informations relatives à la carte à puce telles que l'identifiant d'abonné mobile (« International Mobile Subscriber Identifier » en anglais) et une clé cryptographique d'authentification entre la carte à puce et l'opérateur ainsi que des informations relatives à l'abonné ou client telles que des informations de facturation.

Bien qu'à l'initiative de la carte à puce, le changement de ces paramètres est réalisé sous le contrôle de l'opérateur virtuel hébergé par l'opérateur physique. Mais l'opérateur virtuel ne connaît pas les paramètres secrets correspondant à chaque opérateur physique.

Bien sûr, le chargement des nouveaux paramètres dans la carte à puce doit présenter le même niveau de sécurité entre l'opérateur et la carte à puce que celui qui existe dans l'étape de personnalisation actuelle.

Une fois les nouveaux paramètres chargés et mémorisés, une radiocommunication sollicitant le nouvel opérateur peut être établie à partir de ces nouveaux paramètres en vue d'accéder au service choisi.

Le chargement des paramètres peut être obtenu de différentes façons.

Selon un premier mode de réalisation, les différents opérateurs sont connus d'avance ; les paramètres d'authentification entre eux-mêmes et la carte à puce sont chargés dans la carte à puce de manière statique, c'est-à-dire dans un site spécialisé et sécurisé, sans que la carte à puce soit connectée à un réseau de radiocommunication.

Les paramètres sont chargés et mémorisés une fois pour toute par exemple lors de l'étape de personnalisation et selon la procédure correspondante existant actuellement et présentant le niveau de sécurité requis. Dans ce cas, lorsque le client choisit un service nécessitant un changement d'opérateur, ce changement ne peut alors être réalisé que dans la mesure où les paramètres d'authentification correspondant à cet opérateur cible font partie de la liste des paramètres d'authentification mémorisés.

Les paramètres peuvent aussi être chargés et mémorisés en plusieurs fois, la carte à puce devant alors être rapportée au site spécialisé.

Selon un autre mode de réalisation, la carte à puce ne dispose pas de paramètres connus d'avance comme dans le cas précédent. Les nouveaux paramètres secrets sont téléchargés dans la carte à puce, en ligne via le réseau de radiocommunication de l'opérateur physique d'origine, au fur et à mesure des requêtes de la carte à puce : les paramètres sont téléchargés de manière dynamique selon un protocole assurant le niveau de sécurité requis puis mis en mémoire. Lorsqu'un opérateur pour lequel les paramètres ont déjà été téléchargés est de nouveau sollicité par la carte à puce, il suffit d'utiliser les paramètres mémorisés, sans relancer le protocole de téléchargement de paramètres.

Cette méthode peut être utilisée pour offrir plus de souplesse à la phase de personnalisation puis d'initialisation des cartes tout en conservant le même niveau de sécurité. En effet, si les paramètres d'authentification nécessaires ne sont pas connus d'avance, la société de personnalisation peut se contenter de charger des paramètres d'authentification transitoires, donnant un accès réduit à un service de communication, qui serait appelé service de « post-personnalisation ». La société de personnalisation jouerait alors un rôle de type MVNO : un opérateur physique l'hébergerait en donnant accès au réseau à cette carte, ce qui permettrait ensuite dans un deuxième temps à l'utilisateur d'accéder au service de cet opérateur physique en lui demandant notamment le téléchargement de nouveaux paramètres selon la méthode dynamique en ligne de la présente invention.

La mémoire de la carte à puce est dimensionnée pour ne contenir qu'un nombre déterminé de paramètres d'authentification. Aussi, lorsque ce nombre est atteint, les nouveaux paramètres viennent écraser des paramètres précédemment mémorisés, les plus anciens par exemple.

Cette méthode peut aussi s'appliquer au renouvellement de cartes : un utilisateur d'un service souhaitant changer la carte à puce de son dispositif afin d'avoir par exemple plus de mémoire, peut recevoir par courrier ou se procurer par les canaux de distribution habituels une nouvelle carte venant de la société de personnalisation et contenant des paramètres d'authentification transitoires. Suite à un accord entre l'opérateur physique avec lequel l'utilisateur possède un abonnement et la société de personnalisation, ces paramètres transitoires peuvent donner accès au réseau de l'opérateur physique, un transfert de paramètres étant ensuite réalisé, permettant à l'opérateur de télécharger ses paramètres d'authentification à la place des paramètres transitoires, après certaines formalités administratives. Ce renouvellement peut comprendre aussi une remise à jour des fichiers administratifs et des bases de données de l'opérateur physique HLR (Home Location Register), AUC (Authentication Center), de billing system et de CRM (Customer Relationship Management ) qui permettent à l'opérateur de gérer ses clients.

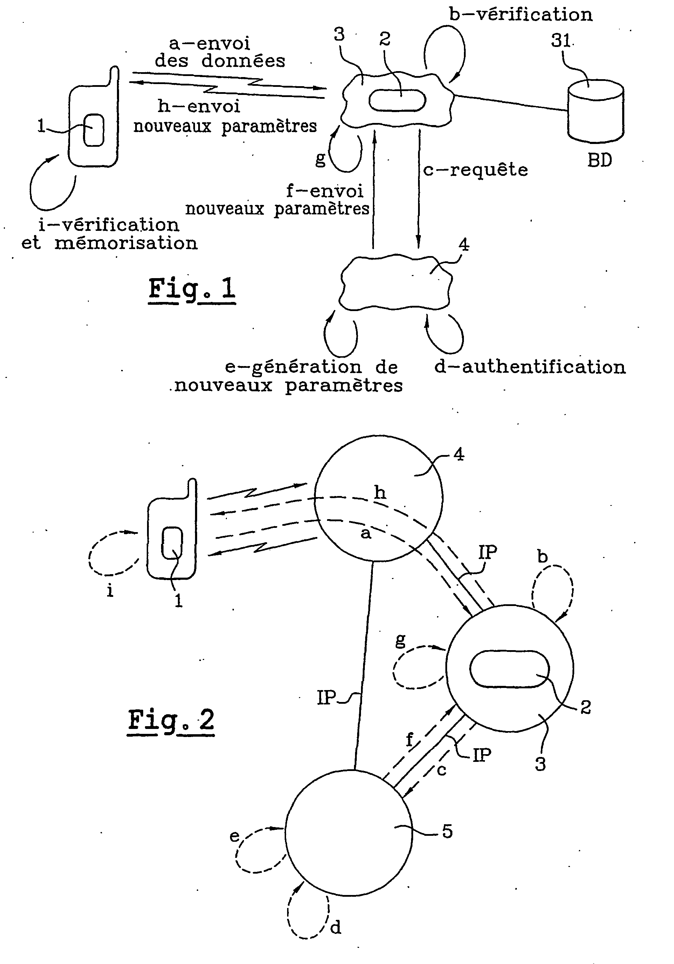

Le protocole sécurisé de changement d'un opérateur 3 vers un opérateur cible 4 se déroule au cours de transactions selon les étapes suivantes décrites en relation avec la figure 1.

Etape a : la carte à puce 1 du dispositif de radiocommunication envoie à l'opérateur virtuel 2 hébergé par un opérateur physique 3, des données en vue du changement d'opérateur. Ces données comprennent outre les informations d'identification de l'opérateur cible, les données de la carte à puce et de l'utilisateur ainsi qu'un certificat spécifique à la carte à puce et au MVNO ; elles sont signées.

On entend par certificat, un élément cryptographique associé à un message (ou plus généralement des données) électronique, permettant d'authentifier l'origine du message et d'assurer son intégrité pendant son transport.

Etape b : l'opérateur virtuel 2 vérifie les données reçues et le certificat ; selon une variante, le certificat n'est pas envoyé par la carte à puce 1 et l'opérateur virtuel 2 se procure le certificat auprès d'une base de données 31 à partir des autres données reçues de la carte 1 puis le vérifie. Si la vérification n'est pas bonne, l'opérateur virtuel 2 rejette la transaction.

Etape c : l'opérateur virtuel 2 envoie à l'opérateur physique cible 4, via l'opérateur physique 3, une requête pour de nouveaux paramètres. Cette requête inclut le certificat.

Etape d : l'opérateur cible 4 authentifie la requête (provenance, droits, ...) au moyen du certificat. Si l'authentification n'est pas bonne, l'opérateur crible 4 rejette la transaction.

Etape e : l'opérateur cible 4 génère les nouveaux paramètres et les chiffre au moyen de la clé qui est dans le certificat.

Etape f : l'opérateur cible 4 envoie les nouveaux paramètres chiffrés à l'opérateur virtuel 2 via l'opérateur physique 3.

Etape g : l'opérateur virtuel 2 authentifie les paramètres chiffrés (provenance, ...) au moyen du certificat qu'il aura gardé en mémoire ou que l'opérateur cible lui aura renvoyé lors de l'étape f. Si l'authentification n'est pas bonne, l'opérateur virtuel rejette la transaction.

Etape h : l'opérateur virtuel 2 signe les nouveaux paramètres chiffrés et envoie à la carte à puce via l'opérateur physique 3, les nouveaux paramètres chiffrés et signés.

Etape i : la carte à puce 1 vérifie la signature de l'opérateur virtuel ; si la vérification n'est pas bonne, la carte à puce rejette la transaction sinon elle déchiffre les nouveaux paramètres et les mémorise ; la carte à puce peut alors utiliser ces nouveaux paramètres pour traiter le changement d'opérateur ou tout autre changement ultérieur nécessitant ces paramètres.

Les authentification, chiffrement et signature qui apparaissent dans les étapes précédentes et qui visent à assurer la sécurité des transactions sont basés sur des schémas connus de cryptographie à clé publique ou à clé secrète symétrique choisis en fonction notamment du niveau de sécurité que l'on souhaite obtenir et/ou des possibilités de l'infrastructure existante..

Comme schématiquement représenté par les flèches sur la figure 1, les communications correspondant aux étapes a et h sont des radiocommunications empruntant le réseau hertzien alors que les communications des étapes c et f empruntent un réseau de type Internet, filaire ou à fibres optiques.

Lorsque la carte à puce demande de changer de l'opérateur cible 4 devenu l'opérateur courant vers un nouvel opérateur cible 5, le chargement des nouveaux paramètres de l'opérateur 5 est toujours réalisé sous le contrôle du MVNO. Seules les étapes a et h sont légèrement modifiées comme indiqué figure 2 : les données envoyées au cours de l'étape a empruntent l'infrastructure de l'opérateur courant 4 avant d'attéindre celle de l'opérateur 3 qui héberge l'opérateur virtuel 2 ; de même au retour lors de l'étape h.

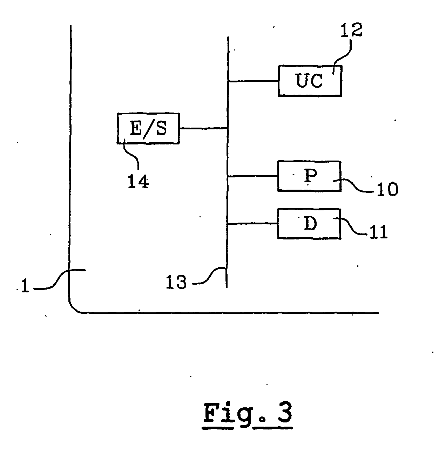

Le changement d'opérateur est géré par la carte à puce 1 représentée figure 3, au moyen d'une mémoire de programme 10 contenant un programme apte à accéder au service spécifique.

Selon l'invention, ce programme inclut un programme de changement d'opérateur basé sur un programme de changement de paramètres d'authentification chargé dans la carte à puce par exemple lors de la phase d'initialisation. Ce programme est mis en oeuvre sur action soit du client par utilisation d'un menu utilisateur tel que décrit précédemment, soit du MVNO, lorsque cette action nécessite bien sûr un changement d'opérateur.

Dans ce cas, si les paramètres correspondant au nouvel opérateur sont stockés en mémoire dans la carte à puce, dans une ou plusieurs mémoires de stockage de données 11, le rôle de ce programme consiste à assurer le changement ou la permutation des paramètres d'authentification mémorisés.

Sinon lorsque les paramètres correspondant au nouvel opérateur ne sont pas stockés en mémoire, le rôle de ce programme consiste à assurer :
- la sécurité du chargement des paramètres d'authentification en vérifiant la signature générée par l'opérateur virtuel qui a pour but d'assurer l'authenticité, la validité et l'intégrité desdits paramètres ; le programme déchiffre les paramètres qui ont été chiffrés par l'opérateur physique cible avec la clé publique de la carte à puce;
- le stockage des nouveaux paramètres d'authentification, une fois que ceux-ci ont été validés et déchiffrés comme indiqué précédemment.

Comme cas particulier de l'invention, nous avons vu que ce programme peut être un programme de type renouvellement de cartes, gérant en outre en ligne les aspects administratifs d'un contrat d'abonnement avec un opérateur ainsi que la synchronisation des informations et des secrets partagés entre la carte et le réseau.

La mémoire de la carte à puce peut être dimensionnée pour stocker les paramètres correspondant à plusieurs opérateurs.

La carte à puce comprend bien évidemment, outre les mémoire de programme 10 et la ou les mémoires de stockage de données 11, les autres éléments habituels tels qu'une unité centrale 12, un bus 13 et une interface d'entrée-sortie 14.

La carte à puce peut être incluse dans le dispositif de radiocommunication ou être en liaison avec celui-ci.

## Revendications

1. Procédé d'accès à un service spécifique, au moyen d'un dispositif de radiocommunication comprenant des premiers paramètres d'authentification **sur le réseau d'un premier opérateur physique, caractérisé en ce qu'**il comporte l'étape consistant à établir une radiocommunication à partir de nouveaux paramètres d'authentification du dispositif de radiocommunication **à un autre opérateur physique assurant ledit service spécifique.**

2. Procédé d'accès à un service spécifique selon la revendication 1, **caractérisé en ce que** le service spécifique est offert par un opérateur virtuel représenté par un opérateur physique, les nouveaux paramètres d'authentification permettant d'établir une radiocommunication avec un autre opérateur physique assurant ledit service spécifique.

3. Procédé selon la revendication précédente, **caractérisé en ce que** les paramètres d'authentification sont contenus dans une carte à puce.

4. Procédé selon la revendication précédente, **caractérisé en ce qu'**il comporte, préalablement à l'établissement de la radiocommunication, l'étape consistant à charger et mémoriser dans la carte à puce lesdits nouveaux paramètres d'authentification de manière sécurisée.

5. Procédé selon la revendication précédente, **caractérisé en ce que** les nouveaux paramètres d'authentification sont chargés sous le contrôle dudit opérateur virtuel.

6. Procédé selon l'une quelconque des revendications 4 ou 5, **caractérisé en ce que** les nouveaux paramètres d'authentification sont chargés dans la carte à puce via le réseau de radiocommunication.

7. procédé selon l'une des revendications 4 à 6, **caractérisé en ce que** le service spécifique correspond à un renouvellement ou initialisation de carte à puce, **en ce que** les premiers paramètres d'authentification sont des paramètres transitoires permettant d'accéder au service spécifique de renouvellement ou initialisation et **en ce que** les nouveaux paramètres permettent l'accès au service d'un opérateur.

8. Procédé selon l'une des revendications 6 ou 7, **caractérisé en ce que** le chargement comporte des transactions réalisées selon les étapes suivantes :
a- envoi par la carte à puce à l'opérateur virtuel, de données en vue du changement d'opérateur,
b- vérification desdites données par l'opérateur virtuel qui, lorsque la vérification n'est pas bonne rejette la transaction, sinon
c- envoi par l'opérateur virtuel à l'opérateur physique cible des données vérifiées,
d- vérification par l'opérateur cible des données reçues qui, lorsque la vérification n'est pas bonne rejette la transaction, sinon
e- génération par l'opérateur cible de nouveaux paramètres d'authentification,
f- envoi des paramètres par l'opérateur cible à l'opérateur virtuel,
g- vérification desdits paramètres par l'opérateur virtuel qui, lorsque la vérification n'est pas bonne rejette la transaction, sinon
h- signature desdits paramètres par l'opérateur virtuel et envoi à la carte à puce desdits paramètres,
i- vérification desdits paramètres par la carte à puce qui, lorsque la vérification n'est pas bonne rejette la transaction sinon mémorise lesdits paramètres.

9. Procédé selon la revendication précédente, **caractérisé en ce que** la vérification des étapes b et/ou d et/ou g et/ou i est réalisée au moyen d'un certificat.

10. Procédé selon l'une quelconque des revendications 8 ou 9, **caractérisé en ce que** l'envoi des étapes a et h transite par un opérateur physique autre que l'opérateur cible ou que l'opérateur représentant l'opérateur virtuel.

11. Procédé selon l'une quelconque des revendications 4 ou 5, **caractérisé en ce que** les nouveaux paramètres d'authentification sont chargés dans la carte à puce en dehors d'une connexion au réseau d'un desdits opérateurs physiques.

12. Procédé selon l'une quelconque des revendications 3 à 11, **caractérisé en ce que** les paramètres d'authentification comportent un identifiant d'abonné mobile, une clé cryptographique d'authentification entre carte à puce et opérateur ainsi que des informations de facturation de l'abonné.

13. Carte à puce (1) d'un dispositif de radiocommunication, apte à accéder à un service spécifique, et comportant une ou plusieurs mémoire(s) de stockage de données (11) et une mémoire de programme (10) contenant un programme apte à accéder audit service spécifique, **caractérisé en ce que** ladite mémoire de stockage de données (11) contient des paramètres d'authentification **sur le réseau d'un premier opérateur physique** et **en ce que** ledit programme comporte des instructions permettant d'assurer le changement des paramètres d'authentification **à un autre opérateur physique assurant ledit service spécifique,** en réponse à une sélection du service spécifique.

14. Carte à puce (1) d'un dispositif de radiocommunication selon la revendication précédente, **caractérisé en ce qu'**elle est apte à accéder à un service spécifique proposé par un opérateur virtuel représenté par le premier opérateur physique et comporte une ou plusieurs mémoire(s) de stockage de données (11) et une mémoire de programme (10) contenant un programme apte à accéder audit service spécifique, ladite mémoire de stockage de données (11) contenant des paramètres d'authentification entre la carte à puce et d'autres opérateurs que l'opérateur virtuel et **en ce que** ledit programme comporte des instructions permettant d'assurer le changement des paramètres d'authentification d'un opérateur à l'autre en réponse à une sélection du service spécifique.

15. Carte à puce selon la revendication précédente, **caractérisé en ce que** ledit programme comporte en outre des instructions permettant d'assurer la sécurité du chargement de nouveaux paramètres d'authentification entre la carte à puce et d'autres opérateurs que l'opérateur représentant l'opérateur virtuel et d'assurer le stockage desdits nouveaux paramètres d'authentification dans ladite mémoire de stockage de données (11).

16. Carte à puce selon l'une des revendications 13 à 15, **caractérisée en ce que** les paramètres d'authentification sont des paramètres transitoires et **en ce que** le programme est un programme de renouvellement ou d'initialisation de carte à puce.

## Claims

1. A method for accessing a specific service, using a radio communication device comprising first parameters for the authentication on the network of a first physical operator, **characterised in that** it includes a step consisting in establishing a radio communication from new parameters for the authentication of the radio communication device with another physical operator providing said specific service.

2. A method for accessing a specific service according to claim 1, **characterised in that** the specific service is provided by a virtual operator represented by a physical operator, with the new authentication parameters making it possible to establish a radio communication with another physical operator providing said specific service.

3. A method according to the preceding claim, **characterised in that** the authentication parameters are contained in a chip card.

4. A method according to the preceding claim, **characterised in that** it includes, prior to the establishing of the radio communication, the step consisting in securely loading and storing in the chip card said new authentication parameters.

5. A method according to the preceding claim, **characterised in that** the new authentication parameters are loaded under the control of said virtual operator.

6. A method according to any one of claims 4 or 5, **characterised in that** the new authentication parameters are loaded into the chip card via the radio communication network.

7. A method according to one of claims 4 to 6, **characterised in that** the specific service corresponds to a chip card renewal or resetting, **in that** the first authentication parameters are transient parameters making it possible to have access to the specific renewal or resetting service and **in that** the new parameters give access to an operator's service.

8. A method according one of claims 6 or 7, **characterised in that** the loading includes transactions carried out according to the following steps:
a- sending of data to the virtual operator through the chip card with a view to changing the operator,
b- checking of said data by the virtual operator which, when the checking is not correct, rejects the transaction, or
c- sending of the checked data by the virtual operator to the target physical operator,
d- checking of the received data by the target operator which, when the checking is not correct, rejects the transaction, or
e- generation of new authentication parameters by the target operator,
f- sending of the parameters by the target operator to the virtual operator,
g- checking of said parameters by the virtual operator, which when the checking is not correct, rejects the transaction, or
h- signing of said parameters by the virtual operator and sending of said parameters to the chip card,
i- checking said parameters by the chip card, which, when the checking is not correct, rejects the transaction or otherwise, stores said parameters.

9. A method according to the preceding claim, **characterised in that** the checking of steps b and/or d and/or g and/or i is carried out using a certificate.

10. A method according to any one of claims 8 or 9, **characterised in that** the sending operation of steps a and h passes through a physical operator which is not the target operator or the operator representing the virtual operator.

11. A method according to any one of claims 4 or 5, **characterised in that** the new authentication parameters are loaded into the chip card off one connection to the network of one of said physical operators.

12. A method according to any one of claims 3 to 11, **characterised in that** the authentication parameters include a mobile subscriber identifier, a cryptographic key for the authentication between a chip card and an operator as well as the subscriber's billing information.

13. A chip card (1) for a radio communication device, able to have access to a specific service, and including one or several data (11) storage memory or memories and a program memory (10) containing a program able to have access to said specific service, **characterised in that** said data storage memory (11) contains parameters for the authentication on the network of a first physical operator and **in that** said program includes instructions making it possible to change the parameters for the authentication to another physical operator providing said specific service, in response to a selection of a specific service.

14. A chip card (1) for a radio communication device according to the preceding claim, **characterised in that** it is able to have access to a specific service provided by a virtual operator represented by the first physical operator and includes one or several data storage memory or memories (11) and a program memory (10) containing a program able to have access to said specific service, said data storage memory (11) containing parameters for the authentication between the chip card and other operators which are not the virtual operator and **in that** said program includes instructions able to change the authentication parameters from one operator to another in response to a selection of said specific service.

15. A chip card according to the preceding claim, **characterised in that** said program further includes instructions making it possible to securely load the parameters for the authentication between the chip card and other operators which are not the operator representing the virtual operator and to provide the storage of said new authentication parameters into said data storage memory (11).

16. A chip card according to claims 13 to 15, **characterised in that** the authentication parameters are transient parameters and **in that** the program is a chip card renewal or resetting program.

## Patentansprüche

1. Verfahren für den Zugang zu einem speziellen Dienst mittels einer Funkvorrichtung mit ersten Authentifizierungseinstellungen, **dadurch gekennzeichnet, dass** es eine Phase enthält, die darin besteht, ausgehend von neuen Authentifizierungseinstellungen der Funkvorrichtung eine Funkverbindung herzustellen.

2. Verfahren für den Zugang zu einem speziellen Dienst nach Patentanspruch 1, **dadurch gekennzeichnet, dass** der spezielle Dienst von einem virtuellen Betreiber angeboten wird, der durch einen natürlichen Betreiber repräsentiert wird, wobei die neuen Authentifizierungseinstellungen die Herstellung einer Funkverbindung mit einem anderen natürlichen Betreiber ermöglichen, der den besagten speziellen Dienst gewährleistet.

3. Verfahren nach einem der vorhergehenden Patentansprüche, **dadurch gekennzeichnet, dass** die Authentifizierungseinstellungen in einer Chipkarte enthalten sind.

4. Verfahren nach dem vorhergehenden Patentanspruch, **dadurch gekennzeichnet, dass** es vor der Herstellung der Funkverbindung eine Phase beinhaltet, die darin besteht, die besagten neuen Authentifizierungseinstellungen sicher auf die Chipkarte zu laden und dort zu speichern.

5. Verfahren nach dem vorhergehenden Patentanspruch, **dadurch gekennzeichnet, dass** die neuen Authentifizierungseinstellungen unter der Kontrolle eines virtuellen Betreibers geladen werden;

6. Verfahren nach Patentanspruch 4 oder 5, **dadurch gekennzeichnet, dass** die neuen Authentifizierungseinstellungen über das Funknetz auf die Chipkarte geladen werden.

7. Verfahren nach einem der Patentansprüche 4 bis 6, **dadurch gekennzeichnet, dass** der spezielle Dienst einer Erneuerung oder Initialisierung der Chipkarte entspricht, dass die ersten Authentifizierungseinstellungen Übergangseinstellungen sind, die den Zugang zu dem speziellen Erneuerungs- oder Initialisierungsdienst ermöglichen und die neuen Einstellungen den Zugang zum Dienst eines Betreibers ermöglichen.

8. Verfahren nach einem der Patentansprüche 6 bis 7, **dadurch gekennzeichnet, dass** das Laden Transaktionen umfasst, die in folgenden Schritten durchgeführt werden:
a-Übersenden von Daten an den virtuellen Betreiber über die Chipkarte, um den Betreiber zu wechseln,
b- Prüfung dieser Daten durch den virtuellen Betreiber, der, wenn die Prüfung negativ verläuft, die Transaktion ablehnt, ansonsten
c- Übersenden der geprüften Daten durch den virtuellen Betreiber an den natürlichen Zielbetreiber,
d-Prüfung der erhaltenen Daten durch den Zielbetreiber, der, wenn die Prüfung negativ verläuft, die Transaktion ablehnt, andernfalls
e-Generierung der neuen Authentifizierungseinstellungen durch den Zielbetreiber,
f-Senden der Einstellungen durch den Zielbetreiber an den virtuellen Betreiber,
g-Prüfung besagter Einstellungen durch den virtuellen Betreiber, der, wenn die Prüfung negativ verläuft, die Transaktion ablehnt, andernfalls
h-Signatur besagter Einstellungen durch den virtuellen Betreiber und Senden besagter Einstellungen an die Chipkarte,
i-Prüfung besagter Einstellungen durch die Chipkarte, die, wenn die Prüfung negativ verläuft, die Transaktion ablehnt und andernfalls die besagten Einstellungen speichert.

9. Verfahren nach dem vorhergehenden Patentanspruch, **dadurch gekennzeichnet, dass** die Prüfungen der Schritte b und/oder d und/oder g und/oder i mittels eines Zertifikats erfolgt.

10. Verfahren nach einem der Patentansprüche 8 oder 9, **dadurch gekennzeichnet, dass** das Senden der Schritte a und h über einen natürlichen Betreiber erfolgt, der nicht der Zielbetreiber und nicht der Betreiber ist, der den virtuellen Betreiber repräsentiert.

11. Verfahren nach einem der Patentansprüche 4 oder 5, **dadurch gekennzeichnet, dass** die neuen Authentifizierungseinstellungen außerhalb einer Verbindung zu dem Netz eines der besagten natürlichen Betreiber auf die Chipkarte geladen werden.

12. Verfahren nach einem der Patentansprüche 3 bis 11, **dadurch gekennzeichnet, dass** die Authentifizierungseinstellungen eine mobile Abonnentenkennung, einen kryptographischen Authentifizierungsschlüssel für Chipkarte und Betreiber sowie die Fakturierungsinformationen des Abonnenten umfassen.

13. Chipkarte (1) einer Funkvorrichtung, die in der Lage ist, auf einen speziellen Dienst zuzugreifen und einen oder mehrere Speicher (s) für die Datensicherung (11) und einen Programmspeicher (10) umfasst, der ein Programm enthält, das in der Lage ist, auf besagten speziellen Dienst zuzugreifen, **dadurch gekennzeichnet, dass** besagter Speicher zur Datensicherung (11) Authentifizierungseinstellungen enthält und dass besagtes Programm Anweisungen enthält, die das Ändern der Authentifizierungseinstellungen als Antwort auf die Auswahl des speziellen Dienstes gewährleistet.

14. Chipkarte (1) einer Funkvorrichtung nach dem vorhergehenden Patentanspruch, **dadurch gekennzeichnet, dass** sie in der Lage ist, auf einen speziellen Dienst zuzugreifen, der von einem virtuellen Betreiber, der durch einen natürlichen Betreiber repräsentiert wir, angeboten wird, und einen oder mehrere Speicher (s) zur Datensicherung (11) sowie ein Speicherprogramm (10) mit einem Programm enthält, das in der Lage ist, auf besagten spezifischen Dienst zuzugreifen, wobei besagter Speicher zur Datensicherung (11) Authentifizierungseinstellungen für die Chipkarte und andere Betreibern, als der Betreiber, der den virtuellen Betreiber repräsentiert, enthält, und **dadurch**, dass besagtes Programm Anweisungen enthält, die den Wechsel der Authentifizierungseinstellungen von einem Betreiber zum anderen als Antwort auf die Auswahl des speziellen Dienstes gewährleistet.

15. Chipkarte nach dem vorhergehenden Patentanspruch, **dadurch gekennzeichnet, dass** besagtes Programm ferner Anweisungen enthält, die das sichere Laden neuer Authentifizierungseinstellungen für die Chipkarte und Betreiber, die nicht der Betreiber sind, der den virtuellen Betreiber repräsentiert, zu gewährleisten und die Speicherung besagter neuer Authentifizierungseinstellungen in besagtem Datensicherungsspeicher (11) gewährleistet.

16. Chipkarte nach einem der Patentansprüche 13 und 15, **dadurch gekennzeichnet, dass** die Authentifizierungseinstellungen Übergangseinstellungen sind, und **dadurch**n dass das Programm ein Programm zur Erneuerung oder Initialisierung der Chipkarte ist.
